# EUROPEAN PATENT APPLICATION

(11) **EP 4 611 070 A1**
(43) Date of publication of application: **03.09.2025**
(21) Application number: 23882735.6
(22) Date of filing: 26.10.2023
(51) Int. Cl.: H01M 4/525, H01M 4/36, H01M 4/505, H01M 4/62, H01M 10/052, H01M 10/0562

(54) **COATING-EQUIPPED POSITIVE ELECTRODE ACTIVE MATERIAL FOR LITHIUM SECONDARY BATTERY, SOLUTION FOR FORMING COATING LAYER, AND LITHIUM SECONDARY BATTERY**

(30) Priority: 27.10.2022 JP 2022172104
(71) Applicant: SUMITOMO METAL MINING CO., LTD., Tokyo 105-8716 (JP); Ohara, Inc., Sagamihara-shi, Kanagawa 252-5286 (JP)
(72) Inventor: KANADA, Satoshi, Tokyo 105-8716 (JP); BONG, Shun Kai, Tokyo 105-8716 (JP); INDA, Yasushi, Sagamihara-shi, Kanagawa 252-5286 (JP); MORINO, Yusuke, Nagaokakyo-shi, Kyoto 617-8555 (JP); SHIOTA, Akihiro, Nagaokakyo-shi, Kyoto 617-8555 (JP)
(74) Representative: Jones, Nicholas Andrew
(86) International application number: PCT/JP2023/038786
(87) International publication number: WO 2024/090533

(57) **Abstract**

A coated positive electrode active material for a lithium secondary battery includes a positive electrode active material and a coating layer disposed on the surface of the positive electrode active material. The positive electrode active material contains cobalt (Co). The coating layer contains at least lithium (Li), phosphorus (P), an element M, and oxygen (O). The element M is a pentavalent transition metal element.

## Description

### TECHNICAL FIELD

The present invention relates to a coated positive electrode active material for a lithium secondary battery, a coating layer forming solution, and a lithium secondary battery.

### BACKGROUND ART

In recent years, with the popularization of portable electronic devices, such as mobile phones, laptop computers, and the like, the development of small-size and lightweight lithium secondary batteries having a high energy density is strongly desired. In addition, the development of lithium secondary batteries having a high energy density as batteries for electric vehicles is strongly desired.

In recent years, all-solid-state batteries have attracted attention as lithium secondary batteries that satisfy such requirements. All-solid-state batteries are composed of a positive electrode layer, a solid electrolyte layer, a negative electrode layer, and the like. There is a strong desire for practical implementation of all-solid-state batteries due to their advantages over batteries that use existing electrolytes (electrolytic solutions), such as organic solvents and the like. The advantages include higher energy density, higher power output, higher voltage, improved safety, and the like.

However, current all-solid-state batteries do not have sufficient output characteristics and a sufficiently high voltage tolerance. One factor behind this is formation of a high-resistance layer at the contact interface between the solid electrolyte and the positive electrode active material.

In order to inhibit formation of this high-resistance layer, what has been pointed out to be effective is to interpose an interfacial layer at the interface between the solid electrolyte and the positive electrode active material. Attempts have been made to improve the output characteristics and the high voltage tolerance of all-solid-state batteries by exploring the method for forming the interfacial layer, the composition of the interfacial layer, and the like. PTLs 1 to 6 can be cited as examples in which providing a coating layer on the surface of the positive electrode active material, and the like have been explored.

However, the methods for forming the interfacial layer, the compositions of the interfacial layer, and the like disclosed in PTLs 1 to 6 cannot sufficiently ensure decrease in resistance, a high voltage tolerance, and a high energy density for all-solid-state batteries.

PTL 1 discloses an example of coating LiCoO₂ with LiNbO₃, and shows that good discharge characteristics can be obtained at an Li-based upper-limit voltage of approximately 4 V. However, there is no description about cases of even higher upper-limit voltages, so the high voltage tolerance at such even higher upper-limit voltages is unknown.

PTL 2 discloses a complex positive electrode active material containing a metal phosphate salt MₓP_{y}O_{z} (where M represents one or more selected from vanadium (V), niobium (Nb), and tantalum (Ta), 1≤y/x≤1.33, and 4≤z/y≤5) on the surface of an Overlithiated Layered Oxide (OLO). However, since the metal phosphate salt does not contain lithium (Li), it is predicted that the Li ion conductivity becomes low and the battery resistance becomes high. Furthermore, there is no description about Examples regarding all-solid-state batteries. All-solid-state batteries using solid electrolytes having a low fluidity unlike organic electrolytic solutions are not impregnated with the electrolyte up to the vicinity of the coating layer. Therefore, when a coating layer free of Li is used, it is predicted that the battery resistance becomes even higher.

PTL 3 discloses an active material coating solution containing lithium, a peroxo complex of niobic acid, and phosphoric acid-based ions, wherein the phosphoric acid-based ions are (PO₄)³⁻, (H₂PO₄)⁻, (HPO₄)²⁻, and (P₂O₇)⁴⁻, and the concentration of the phosphoric acid-based ions contained in the active material coating solution is 0.02 or greater and 3.01 or less in terms of ratio by number of moles to niobium. However, PTL 3 does not disclose a specific Example in which a positive electrode active material is coated, and it is unknown whether the intended coating layer can be formed on the surface of a positive electrode active material powder.

PTL 4 describes a lithium-ion secondary battery including: a positive electrode layer containing a coated positive electrode active material, which is a positive electrode active material coated with a coating material containing LiZr₂(PO₄)₃; a negative electrode layer; and a solid electrolyte layer containing a sulfide-based solid electrolyte. However, as described in NPL 1, a compound containing Li, Zr, and O has a lower oxidation potential than that of a compound containing Li, Nb, and O and is therefore predicted to be poorer in terms of high voltage tolerance.

PTL 5 describes a positive electrode complex material containing a LiNi_{0.5}Mn_{0.5}O₂ positive electrode active material having a layered structure and Li₂O-P₂O₅₋Nb₂O₅-B₂O₃-GeO₂ glass coating the surface of the positive electrode active material. However, according to Examples, a high discharge capacity cannot be obtained unless the cutoff voltage is set to 0.9 V.

PTL 6 describes a method for producing a positive electrode complex material for a sulfide all-solid-state battery, including a coating step of producing a coated material by coating a positive electrode active material having a spinel structure containing Li and Mn with Li₂O-P₂O₅-Nb₂O₅-B₂O₃-GeO₂ glass, and a firing step of firing the coated material at a temperature equal to or higher than the softening point of the Li₂O-P₂O₅-Nb₂O₅-B₂O₃-GeO₂ glass and equal to or lower than 650°C. However, there are problems of a low discharge capacity and a low energy density.

### CITATION LIST

### PATENT LITERATURE

PTL 1: International Publication No. WO 2007/004590
PTL 2: Japanese Patent Application Laid-Open Publication No. 2016-127024
PTL 3: Japanese Patent Application Laid-Open Publication No. 2017-191667
PTL 4: Japanese Patent Application Laid-Open Publication No. 2015-72772
PTL 5: Japanese Patent Application Laid-Open Publication No. 2016-39062
PTL 6: Japanese Patent Application Laid-Open Publication No. 2016-81822

### NON-PATENT LITERATURE

NPL 1: William D. Richards, Lincoln J. Miara, Yan Wang, Jae Chul kim, and Gerband Ceder, Chem. Mater. 28 (2016), pp. 266-273
NPL 2: Yizhou Zhu, Xingfeng He, Yifei Mo, J. Mater. Chem. A, 4 (2016), pp. 3253-3266
NPL 3: Benson K Money and K Hariharan, J. Phys.: Condens. Matter 21 (2009) 115102
NPL 4: B.V.R. Chowdari, K. Radhakrishnan, Solid State Ionics Volume 44, Issues 3-4, (1991), pp. 325-329

### SUMMARY OF THE INVENTION

### TECHNICAL PROBLEM

In view of the problems of the existing techniques described above, an object of the present invention is to provide a coated positive electrode active material for a lithium secondary battery that can realize a low resistance, a high energy density, and a high voltage tolerance when applied to a lithium secondary battery.

### SOLUTION TO THE PROBLEM

In order to solve the above problems, according to one embodiment of the present invention, a coated positive electrode active material for a lithium secondary battery is provided, including:
a positive electrode active material; and
a coating layer disposed on a surface of the positive electrode active material,
wherein the positive electrode active material contains cobalt (Co),
the coating layer contains at least lithium (Li), phosphorus (P), an element M, and oxygen (O), and
the element M is a pentavalent transition metal element.

### ADVANTAGEOUS EFFECTS OF THE INVENTION

According to one embodiment of the present invention, it is possible to provide a coated positive electrode active material for a lithium secondary battery that can realize a low resistance, a high energy density, and a high voltage tolerance when applied to a lithium secondary battery.

### BRIEF DESCRIPTION OF THE DRAWINGS

[FIG. 1] FIG. 1 is a schematic cross-sectional view of a coated positive electrode active material for a lithium secondary battery according to an embodiment of the present disclosure.
[FIG. 2] FIG. 2 is a schematic cross-sectional view of a lithium secondary battery.

### DETAILED DESCRIPTION OF THE INVENTION

Embodiments of the present invention will be described below with reference to the drawings. However, the present invention is not limited to the following embodiments, and various modifications and substitutions are applicable to the following embodiments without departing from the scope of the present invention.

### [Coated Positive Electrode Active Material for Lithium Secondary Battery]

A coated positive electrode active material for a lithium secondary battery of the present embodiment (hereinafter also referred to as "coated positive electrode active material") may contain a positive electrode active material and a coating layer disposed on a surface of the positive electrode active material. The positive electrode active material contains cobalt (Co). The coating layer is disposed on the surface of the positive electrode active material and may contain at least Li (lithium), P (phosphorus), an element M, and oxygen (O) element. The element M may be a pentavalent transition metal element.

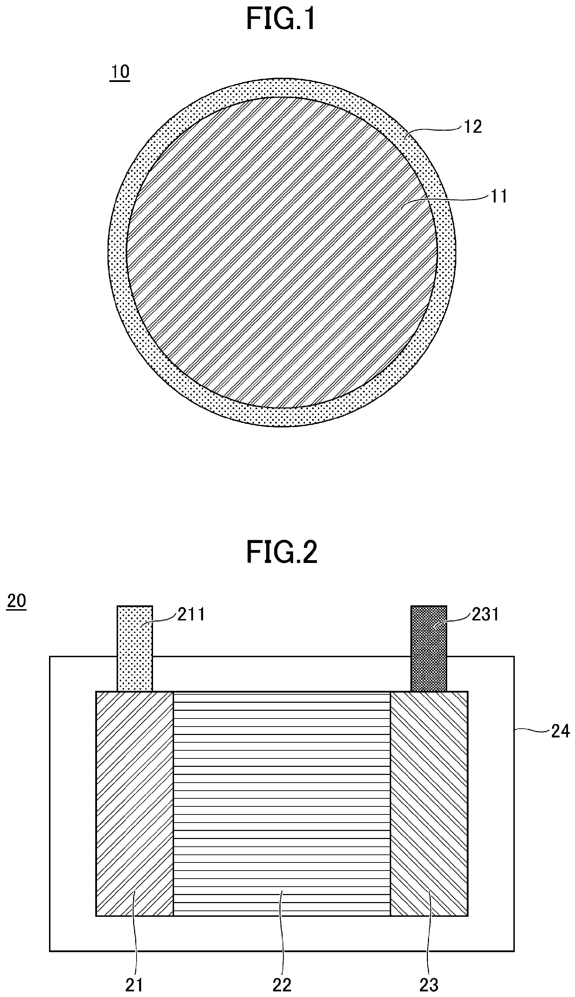

FIG. 1 is a schematic cross-sectional view of the coated positive electrode active material for a lithium secondary battery of this embodiment. It should be noted that FIG. 1 is merely a schematic view. Therefore, the cross-sectional shape of the particles of the coated positive electrode active material 10 for a lithium secondary battery is not limited to a circle, but can have any shape. Also, the coating layer 12 is not required to have a fixed thickness.

As shown in FIG. 1, the coated positive electrode active material 10 for a lithium secondary battery of this embodiment can contain a positive electrode active material 11 and a coating layer 12 disposed on the surface of the positive electrode active material 11.

Hereinafter, each member contained in the coated positive electrode active material for a lithium secondary battery of this embodiment will be described.

### (1) Positive Electrode Active Material

The positive electrode active material used in the coated positive electrode active material for a lithium secondary battery of this embodiment needs only to be a positive electrode active material into and from which Li can be intercalated and deintercalated through an electrochemical reaction.

As the positive electrode active material, for example, one or more types selected from intercalation-type positive electrode active materials, such as LiCoO₂, LiNiO₂, LiNiₓCo_{y}Mn_{z}O₂ (x+y+z=1), LiNiₓCo_{y}Al_{z}O₂ (x+y+z=1), LiMn₂O₄, LiNi_{0.5}Mn_{1.5}O₄, LiFePO₄, LiNiFePO₄, and the like, and conversion reaction-type positive electrode active materials, such as FeF₃, Li₂S, and the like may be used.

It is preferable that the positive electrode active material has a layered structure. This is because a positive electrode active material having a layered structure can particularly enhance the output characteristics when applied to a lithium secondary battery. When the positive electrode active material has a layered structure, it is preferable that the positive electrode active material contains at least one of layered rock salt structures (α-NaFeO₂ type structures) represented by LiCoO₂, LiNiO₂, LiNiₓCo_{y}Mn_{z}O₂ (x+y+z=1), LiNiₓCo_{y}Al_{z}O₂ (x+y+z=1), and the like, overlithiated layered structures represented by Li₂MnO₃, Li₂MnO₃-LiNiₓCo_{y}Mn_{z}O₂ (x+y+z=1), and the like, and zigzag layered structures represented by LiMnO₂ and the like.

It is preferable that the positive electrode active material contains at least cobalt (Co). Since a positive electrode active material containing cobalt can have a better structural stability during charging and discharging, it is possible to inhibit deterioration of the active material matrix during use of the battery at a high voltage. This improves the high voltage tolerance through a synergy with the effect of the coating layer described below, i.e., inhibition of formation of a high-resistance layer on the positive electrode active material surface, which is the contact interface with the solid electrolyte.

The structure of the positive electrode active material can be identified by such analytical methods as **X-**ray diffractometry, electron beam diffractometry, and the like. The ratio between the elements contained in the positive electrode active material by number of moles can be identified by such analytical methods as a fluorescent X-ray analysis, ICP emission spectroscopy, and the like.

The shape of the positive electrode active material is not particularly restricted, and may be, for example, positive electrode active material particles having an average particle diameter of some nanometers to some tens of micrometers and having the form of primary particles or secondary particles in which primary particles are aggregated, or a thin film-shaped positive electrode film. Examples of thin film-shaped positive electrode films include positive electrode films formed by a Pulsed Laser Deposition (PLD) method.

### (2) Coating Layer

One purpose for which the coating layer is provided is to interpose an interfacial layer at the interface between the solid electrolyte and the positive electrode active material to inhibit formation of a high-resistance layer at the contact interface between the solid electrolyte and the positive electrode active material during charging and discharging of an all-solid-state battery. Therefore, the coating layer is formed and disposed on the surface of the positive electrode active material.

The coating layer needs only to coat at least a part of the surface of the positive electrode active material. However, the higher the coverage proportion, which is the area proportion of the area coated with coating layer to the surface of the positive electrode active material, the better.

The thickness of the coating layer is not particularly limited, yet is preferably, for example, 0.1 nm or greater and 50 nm and less. By adjusting the thickness of the coating layer to 50 nm or less, it is possible to particularly restrict the resistance of the coating layer against the lithium ion conduction, and to particularly restrict the resistance of the battery when the coating layer is applied to a lithium-ion secondary battery. In addition, by adjusting the thickness of the coating layer to 0.1 nm or greater, it is possible to particularly enhance the action of inhibiting formation of a high-resistance layer on the surface of the positive electrode active material, and to particularly improve the high voltage tolerance.

The average film thickness of the coating layer is not particularly limited, yet may be, for example, 1 nm or greater, preferably 1 nm or greater and 50 nm or less, more preferably 1 nm or greater and 10 nm or less, more preferably 1 nm or greater and 8 nm or less, and particularly preferably 1 nm or greater and 5 nm or less. By adjusting the average film thickness of the coating layer to 1 nm or greater, it is possible to particularly enhance the action of inhibiting formation of a high-resistance layer on the surface of the positive electrode active material, and to particularly improve the high voltage tolerance. In addition, by adjusting the average film thickness of the coating layer to 50 nm or less, it is possible to particularly restrict the resistance of the coating layer against the lithium ion conduction, and to particularly restrict the resistance of the battery when the coating layer is applied to a lithium ion secondary battery.

The average film thickness of the coating layer can be determined by observation of a cross-section of secondary particles of the positive electrode active material contained in the coated positive electrode active material using a Transmission Electron Microscope (TEM). In the measurement and calculation of the average film thickness of the coating layer, for example, a desired number of positive electrode active material secondary particles that have the coating layer are selected. Then, for a desired number of primary particles on which the coating layer is present in each of the selected positive electrode active material secondary particles, the film thickness of the coating layer is measured at a desired location on the surface, and the coating layer average film thickness of the secondary particle concerned is calculated. Then, the respective coating layer average film thicknesses obtained for the selected secondary particles are further averaged, and the obtained value can be used as the coating layer average film thickness of the coated positive electrode active material.

As any average values, an arithmetic mean can be used. Therefore, the coating layer average film thickness of each secondary particle of the positive electrode active material can be calculated by adding the coating layer film thicknesses measured for the secondary particle and dividing the sum by the number of measurement points. The average value of the coating layer average film thicknesses of the selected secondary particles can be calculated by adding the average film thicknesses of the evaluated secondary particles and dividing the sum by the number of evaluated secondary particles.

A sample for observation of a cross-section of the positive electrode active material secondary particles to be used for the evaluation can be produced by embedding a plurality of coated positive electrode active materials in a resin, and processing the resulting product by cross-section polisher (CP) processing or the like to a state in which cross-sections of particles can be observed.

The coating layer contains at least lithium (Li), phosphorus (P), an element M, and oxygen (O).

With the presence of the lithium element in the coating layer, the lithium element serves as carriers for lithium ion conduction in the coating layer, and provides lithium ion conductivity. In addition, the presence of the lithium element and the phosphorus element in the coating layer can inhibit the coating layer from being denatured at a high potential. This effect of inhibiting denaturation at a high potential is considered attributable to a first-principles calculation-based high oxidation potential of a lithium phosphorus complex oxide, which is 4.0 V to 5.0 V on an Li basis, as also described in, for example, NPL 2.

It is preferable that the element M is a transition metal element that can assume a valence value of 5. Examples of the element M include vanadium (V), niobium (Nb), and tantalum (Ta), which are group-5 transition metal elements. One or more types selected from the above elements can be suitably used.

When the coating layer contains a pentavalent transition metal element having the same valence value as that of phosphorus as the element M, it is possible to obtain an effect of inhibiting crystallization of lithium and phosphorus and maintaining an amorphous state. It is more preferable that niobium (Nb) is one among multiple elements M, and it is yet more preferable that niobium is the sole element M, because among pentavalent transition metal elements, niobium can particularly easily improve the lithium ion conductivity.

It is preferable that the coating layer is lowly crystalline, and it is more preferable that the coating layer is amorphous, because a lowly-crystalline coating layer can have an improved lithium ion conductivity that restricts increase in resistance, and can enhance the battery capacity when the coating layer is applied to a lithium secondary battery. An amorphous coating layer can particularly enhance this effect. It is possible to confirm that the coating layer is lowly crystalline or amorphous, by, for example, X-ray diffraction and electron beam diffraction.

When the coating layer contains oxygen together with lithium, phosphorus, and the element M, it is possible for the coating layer to be formed in an amorphous or lowly crystalline state.

The ratio of phosphorus to the sum of phosphorus and the element M contained in the coating layer by number of moles is preferably in the range of 0.1 or greater and 0.9 or less. The lower limit is more preferably 0.2 or greater, and more preferably 0.3 or greater. The upper limit is more preferably 0.85 or less, and more preferably 0.8 or less. Therefore, the ratio of phosphorus to the sum of phosphorus and the element M contained in the coating layer by number of moles may be 0.2 or greater and 0.85 or less, and may be 0.3 or greater and 0.8 or less.

By adjusting the ratio of phosphorus to the sum of phosphorus and the element M contained in the coating layer by number of moles to 0.1 or greater, it is possible to enhance the electrical potential tolerance of the coating layer, to inhibit denaturation of the coating layer during charging and discharging, and to particularly restrict the battery resistance.

By adjusting the ratio of phosphorus to the sum of phosphorus and the element M contained in the coating layer by number of moles to 0.9 or less, it is possible to enhance the lithium ion conductivity of the coating layer, and to particularly enhance the charge/discharge capacity.

The ratio (content ratio) between phosphorus and the element M in the coating layer can be determined by, for example, an analysis using cross-sectional SEM-EDS(SEM: Scanning Electron Microscope, EDS: Energy Dispersive X-ray Spectroscopy), TEM-EDS (TEM: Transmission Electron Microscope), and the like. When phosphorus and the element M are not contained in the positive electrode active material, which is the matrix, or in a positive electrode layer constituent material, or when it is known beforehand that phosphorus and the element M are contained in the positive electrode active material, which is the matrix, or in the positive electrode layer constituent material, the ratio between phosphorus and the element M in the coating layer can be calculated by a chemical analysis (Inductively Coupled Plasma-Optical Emission Spectrometry (ICP-OES) and the like) of the positive electrode active material or the positive electrode layer after being coated.

The coating layer can contain elements other than lithium, phosphorus, the element M, and oxygen within a range in which the lithium ion conductivity is not significantly impaired. The coating layer can also contain elements, such as aluminum (Al), silicon (Si), magnesium (Mg), calcium (Ca), and the like.

### [Method for Producing Coated Positive Electrode Active Material for Lithium Secondary Battery, and Coating Layer Forming Solution]

A method for producing a coated positive electrode active material for a lithium secondary battery according to this embodiment is not particularly limited. The method for producing a coated positive electrode active material for a lithium secondary battery according to this embodiment can include, for example, a coating layer forming solution preparation step, a mixing step, and a drying step.

In the coating layer forming solution preparation step, a coating layer forming solution for forming the coating layer can be prepared.

In the mixing step, the positive electrode active material as the matrix and the coating layer forming solution can be mixed.

In the drying step, the mixture obtained in the mixing step can be dried.

The conditions of the coating layer on the surface of the positive electrode active material, such as film thickness, uniformity, crystallinity, and the like can be controlled based on the conditions of the coating layer forming solution, the mixing and drying conditions, and the like.

Each step will be described below.

### (1) Coating Layer Forming Solution Preparation step, and Coating Layer Forming Solution

In the coating layer forming solution preparation step, a coating layer forming solution for forming the coating layer can be prepared.

The coating layer forming solution is used to form the coating layer of the coated positive electrode active material for a lithium secondary battery. The coating layer forming solution can contain lithium (Li), phosphorus (P), and the element **M.** The coating layer forming solution can be a mixture liquid of a plurality of types of solutions, and can contain, for example, a solution containing lithium (Li) and phosphorus (P) and a solution containing lithium (Li) and the element **M.**

The solvent of the coating layer forming solution can be any solvent that can dissolve the supply sources of lithium, phosphorus, and the element M. For example, water and an organic solvent can be used, and alcohol or the like can be used as the organic solvent. The solvent of the coating layer forming solution can be a mixture liquid of water and alcohol. Therefore, the solvent of the coating layer forming solution can be one or more types selected from water and alcohols. The coating layer forming solution can be one or more types selected from aqueous solutions and alcohol solutions. As the alcohol, for example, ethanol, methanol, 2-methoxyethanol, and the like can be used. As the ethanol, anhydrous ethanol can be used. Preferably, the alcohol is a component that can be removed at the drying temperature in the drying step. Therefore, alcohol can be selected in accordance with the drying temperature in the drying step and the like.

As the solute contained in the coating layer forming solution, compounds and the like containing lithium, phosphorus and the element M can be used. The solute may be a mixture of a plurality of types of compounds. The compound may be glass.

When a compound is used as the solute contained in the coating layer forming solution, examples of the lithium source for supplying lithium include lithium ethoxide (LiOC₂H₅) and the like. As the element M source for supplying the element M, various compounds containing the element M can be used. When niobium is one among multiple elements M, examples of the niobium source for supplying niobium include niobium pentaethoxide (Nb(OC₂H₅)₅) and the like. Examples of the phosphorus source for supplying phosphorus include dibutyl phosphate (C₈H₁₉O₄P) and the like.

Glass can also be used as the solute in the coating layer forming solution of this embodiment. Therefore, the coating layer forming solution of this embodiment may contain, for example, glass containing lithium (Li) and phosphorus (P) (hereinafter, may also be referred to as "Li-P glass") and glass containing lithium (Li) and the element M described above (hereinafter, may also be referred to as "Li-M glass").

In this case, the coating layer forming solution may be a solution obtained by dissolving the Li-P glass and the Li-M glass in the solvent, such as water, an organic solvent (e.g., an alcohol and the like), and the like.

As described above, the coating layer forming solution may be a solution or the like containing Li-P glass and Li-M glass. Since such glass can be dissolved in a solvent, such as water, it is unnecessary to add an organic component, such as citric acid and the like, to the coating layer forming solution, and it is preferable that the coating layer forming solution does not contain any organic component that cannot be removed in the drying step described later. With the coating layer forming solution being free of any organic component that cannot be removed in the drying step, it is possible to inhibit a carbon component derived from the organic component from remaining in the coating layer, and to particularly restrict a resistance increase in the lithium secondary battery.

The coating layer forming solution can be prepared by dissolving, for example, Li-P glass and Li-M glass in a solvent capable of dissolving these types of glass. Examples of the solvent include one or more types selected from water, organic solvents (e.g., alcohols and the like), and the like, as described above.

The coating layer forming solution may be prepared by mixing a solution in which Li-P glass is dissolved and a solution in which Li-M glass is dissolved.

When glass, such as Li-P glass or the like, is used as the solute, it is preferable that the coating layer forming solution is a solution in a state in which Li-P glass and Li-M glass are dissolved in the solvent while partially maintaining the glass structure in the form of water glass.

It can be determined whether or not Li-P glass and Li-M glass maintain their glass structure in the form of water glass in the coating layer forming solution by checking whether a high-viscosity water glass forms when the solution is heated and simmered down. It can be determined whether or not glass is dissolved in the coating layer forming solution by checking for precipitate formation centrifugation of the solution.

The above-mentioned Li-P glass can be synthesized by, for example, a publicly-known method such as NPL 3. Li-M glass can also be synthesized by, for example, a publicly-known method such as NPL 4. The Li-M glass may also contain phosphorus (P).

It is preferable that the coating layer forming solution of this embodiment does not contain ammonia or a hydrogen peroxide solution that are highly volatile at room temperature. By the coating layer forming solution of this embodiment being free of ammonia or a hydrogen peroxide solution, a solution having a high storage stability in an open air can be obtained. When it is said that the coating layer forming solution of this embodiment does not contain ammonia or a hydrogen peroxide solution, this means that that these components are not proactively added in the coating layer forming solution, and does not exclude that they may be mixed in small amounts as unavoidable impurities.

When glass such as Li-P glass is used as the solute, it is preferable that Li-P glass and Li-M glass are present in the coating layer forming solution of this embodiment while partially maintaining the glass structure in the form of water glass. By Li-P glass and Li-M glass being present in the coating layer forming solution of this embodiment while partially maintaining the glass structure in the form of water glass, it is easy for an amorphous or lowly crystalline coating layer to be formed when the solution is made to adhere to the surface of the matrix and dried in the mixing step and the drying step described below.

Although a case where Li-P glass and Li-M glass are mainly used as solutes has been described here as an example, lithium, phosphorus, and the element M are not limited to the form of the glass and may be added to the solvent in the form of compounds or the like to constitute the coating layer forming solution.

### (2) Mixing Step

In the mixing step, the positive electrode active material, which is a matrix, and the coating layer forming solution can be mixed.

As for the mixing method used when mixing the positive electrode active material and the coating layer forming solution in the mixing step, for example, a method that can coat the matrix thinly and uniformly with the coating layer forming solution can be used, and the mixing method is not particularly limited. As the mixing method, for example, a method of spraying the coating layer forming solution while stirring and fluidizing the matrix is preferable.

The method for stirring and fluidizing the matrix is not particularly limited, and a method that rarely causes the particles of the positive electrode active material, which is the matrix, to be disaggregated or damaged by impact can be suitably used. For example, a rolling fluidized bed apparatus can be used.

In addition, it is possible to perform drying while performing mixing, by heating the mixing apparatus used in the mixing step from the outside or adjusting the temperature of a gas, such as air or the like, which is to be introduced into the apparatus. That is, at least parts of the mixing step and the drying step can be performed simultaneously.

### (3) Drying Step

In the drying step, the mixture obtained in the mixing step can be dried.

The drying method and the drying conditions used in the drying step are not particularly limited as long as it is possible to remove the solvent contained in the coating layer forming solution by the drying method and the drying conditions. In the drying step, for example, it is possible to simultaneously performing mixing and drying by introducing heated air into the mixing apparatus during the mixing in the mixing step using the mixing apparatus described above. In addition, the mixture obtained in the mixing step may be placed in a dryer or an electric furnace to dry the mixture.

The drying temperature is not particularly limited as long as it is a temperature equal to or higher than a temperature at which the solvent of the coating layer forming solution can be removed. The drying temperature is preferably equal to or higher than 80°C as the lower limit, and more preferably above 120°C. By setting the drying temperature to 80°C or higher, it is possible to save the time required to remove the solvent and enhance the productivity.

The drying temperature is preferably equal to or lower than 350°C as the upper limit, and more preferably 250°C or lower. By setting the drying temperature to 350°C or lower, it is possible to inhibit a reaction between the coating layer and the matrix, and to inhibit formation of a high-resistance layer and crystallization of the coating layer. Therefore, the lithium ion conductivity of the coating layer can be enhanced, and the resistance of the lithium secondary battery can be restricted.

The drying temperature can be, for example, 80°C or higher and 350°C or lower, and may be 120°C or higher and 250°C or lower.

### [Lithium Secondary Battery]

A lithium secondary battery of this embodiment may include a positive electrode, a negative electrode, and a solid electrolyte layer. The lithium secondary battery of this embodiment may be, for example, a lithium secondary battery consisting of a positive electrode, a negative electrode, and a solid electrolyte layer.

Specifically, like a lithium secondary battery 20 shown in FIG. 2, the lithium secondary battery of this embodiment may include a positive electrode 21, a solid electrolyte layer 22, and a negative electrode 23. As shown in FIG. 2, the solid electrolyte layer 22 may be disposed between the positive electrode 21 and the negative electrode 23, and these members can be sealed in a container 24. The positive electrode 21 and the negative electrode 23 may be provided with a positive electrode terminal 211 and a negative electrode terminal 231, respectively, such that they can be connected to members outside the container 24.

Each member will be described below.

### (1) Positive Electrode

The positive electrode needs only to contain at least the above-described coated positive electrode active material, and may be composed only of the above-described coated positive electrode active material, or may be composed of the above-described coated positive electrode active material, any other positive electrode active material, and a solid electrolyte.

As the solid electrolyte, one or more types selected from, for example, sulfide-based solid electrolytes, oxide-based solid electrolytes, and polymer electrolytes can be used. The positive electrode may contain, for example, the above-described coated positive electrode active material for a lithium secondary battery and a sulfide-based solid electrolyte. In addition to the positive electrode active material and the solid electrolyte, the positive electrode may contain such materials as a conductive aid, a binder, an ionic liquid, and the like, and other additives.

When the positive electrode contains a sulfide-based solid electrolyte, a material described later in the description of the solid electrolyte can be suitably used as the sulfide-based solid electrolyte, and, for example it is preferable that the sulfide-based solid electrode includes at least one of argyrodite-type sulfide-based solid electrolytes or Li₂S-P₂S₅-based solid electrolytes.

### (2) Negative Electrode

The negative electrode needs only to contain at least a negative electrode active material, and may be composed only of the negative electrode active material, or may be composed of the negative electrode active material and a solid electrolyte.

As the negative electrode active material, for example, a material containing lithium, such as metal lithium, a lithium alloy, and the like, or an occlusion material that can occlude lithium ions and from which lithium ions can be desorbed can be employed. The occlusion material is not particularly limited, and, for example, natural graphite, artificial graphite, organic compound sintered bodies of phenolic resin and the like, and carbon materials, such as coke and the like, can be used. As the solid electrolyte, one or more types selected from, for example, sulfide-based solid electrolytes, oxide-based solid electrolytes, and polymer electrolytes can be used. In addition to the negative electrode active material and the solid electrolyte, the negative electrode may contain such materials as a conductive aid, a binder, an ionic liquid, and the like, and other additives.

### (3) Solid Electrolyte Layer

As long as the solid electrolyte layer contains a solid electrolyte having lithium ion conductivity, the solid electrolyte layer may consist only of a solid electrolyte, or may contain, for example, such materials as a binder and the like.

The solid electrolyte used in the lithium secondary battery of this embodiment is not particularly limited as long as it is a solid electrolyte having lithium ion conductivity. As the solid electrolyte, one or more types selected from, for example, sulfide-based solid electrolytes, oxide-based solid electrolytes, and polymer electrolytes may be used.

Examples of sulfide-based solid electrolytes include, but are not limited to, sulfide-based amorphous solid electrolytes, sulfide-based crystalline solid electrolytes, and argyrodite-type solid electrolytes. Specific examples of sulfide-based solid electrolytes include, but are not limited to, solid electrolytes having an argyrodite structure, such as Li₇₋ₓPS₆₋ₓClₓ and the like; Li₂S-P₂S₅-based solid electrolytes, such as Li₇P₃S₁₁, Li₃PS₄, Li_{B}P₂S₉, Li₂S-P₂S₅-LiI, Li₂S-P₂S₅-LiI-LiBr, and the like; Li₂S-P₂S₅-GeS₂ (Li₁₃GeP₃S₁₆, Li₁₀GeP₂S₁₂, and like), LiI-Li₂S-P₂O₅, LiI-Li₃PO₄-P₂S₅, and the like; and combinations thereof.

Examples of oxide-based solid electrolytes include, but are not limited to, Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊xPO₄₋ₓNₓ (LiPON), and the like.

Examples of polymer electrolytes include, but are not limited to, polyethylene oxide (PEO), polypropylene oxide (PPO), and copolymers thereof.

The solid electrolyte may be glass or crystallized glass (glass ceramic).

### Examples

Hereinafter, the present invention will be described in more detail by way of Examples. However, the present invention is not in any way limited by these Examples.

### (Example 1)

### (1) Coating Layer Forming Solution Preparation Step

LiPO₃ glass was prepared by a melt rapid quenching method using Li₂CO₃ and H₃PO₄ as raw materials. Likewise, LiNbO₃ glass containing P₂O₅ was prepared by a melt rapid quenching method using Li₂CO₃, H₃PO₄, and Nb₂O₅ as raw materials.

Six grams of the synthesized LiPO₃ glass was added and dissolved in 100 g of pure water, to prepare a solution containing Li-P glass. Similarly, 6 g of the synthesized LiNbO₃ glass containing P₂O₅ was added and dissolved in 100 g of pure water, to prepare a solution containing Li-Nb glass.

Then, the solution containing the Li-P glass and the solution containing the Li-Nb glass were mixed such that the ratio between P and Nb by number of moles would be 10:90, and an LiOH aqueous solution was added thereto to adjust the number of moles of Li such that Li: (P+Nb) would be 1:1, to thereby prepare a coating layer forming solution containing the Li-P glass and the Li-Nb glass and containing no organic components. The coating layer forming solution was colorless and transparent, and no solids, such as precipitates and the like, were observed.

### (2) Mixing Step

In the mixing step, a positive electrode active material powder and the coating layer forming solution were mixed.

Specifically, while the positive electrode active material powder was fluidized in a rolling fluidized bed granulation coating apparatus (obtained from Powrex Corp., MP-micro), the coating layer forming solution was sprayed into the fluidized bed and the temperature of the air supplied into the fluidized bed was controlled, to thereby form a coating layer on the surface of the positive electrode active material powder. The fluidized bed means a region in the rolling fluidized bed granulation coating apparatus where the positive electrode active material powder fluidizes.

As the positive electrode active material powder, a positive electrode active material powder having a layered rock salt-type crystal structure represented by the composition of LiNi_{0.5}Co_{0.2}Mn_{0.3}O₂ was used.

In the mixing step, the coating amount was calculated and adjusted such that the coating layer film thickness would be 2 nm with respect to the specific surface area of the positive electrode active material powder obtained by the BET method. The coating layer film thickness was calculated using the density of LiPO₃ crystal (2.46 g/cm³) and the density of LiNbO₃ crystal (4.65 g/cm³), assuming that the coating layer would be formed of crystals of each glass contained in the coating layer forming solution.

### (3) Drying Step

Subsequently, the mixture, which was the positive electrode active material powder on which a coating layer was formed, was kept in an oxygen atmosphere at a temperature of 200°C for 1 hour and dried, to thereby remove moisture adhering to the positive electrode active material. By the above procedure, a coated positive electrode active material powder of which the coating layer contains lithium, phosphorus, niobium, and oxygen was produced. The coated positive electrode active material powder had the coating layer on the surface of the positive electrode active material, and the composition of the positive electrode active material was LiNi_{0.5}Co_{0.2}Mn_{0.3}O₂ as described above.

In the other Examples below, the composition of the positive electrode active material was the same. The coating layer disposed on the surface of the positive electrode active material contains lithium, phosphorus, niobium, and oxygen, and the ratio of phosphorus to the sum of phosphorus and niobium contained in the coating layer by number of moles was the same as the value in the coating layer forming solution.

### [Evaluation]

When powder X-ray diffraction was performed on the coated positive electrode active material powder, no diffraction peaks attributable to Nb compounds and P compounds, such as LiNbO₃, LiPO₃, and the like were observed, and it was confirmed that the coating layer was amorphous.

Multiple particles of the coated positive electrode active material obtained were embedded in a resin, and processed by cross-section polisher (CP) processing, to bring the particles into a state in which cross-sections of the particles could be observed.

The prepared sample for observation of cross-sections of the particles was observed by a Transmission Electron Microscope (TEM). Then, ten secondary particles of the positive active material were selected in the observation field of view, the film thicknesses of coating layers present on the surfaces of ten primary particles on which coating layers were present in each secondary particle were measured at ten locations per primary particle, and the average film thickness of the coating layers in the secondary particle was calculated. The average film thickness of the coating layer in each secondary particle was calculated by adding the coating layer film thicknesses measured at the measurement points in the secondary particle and dividing the sum by the number of the measurement points.

The average film thicknesses of the coating layers of the ten secondary particles evaluated were further averaged, to thereby calculate the film thickness (average film thickness) of the coating layers of the coated positive electrode active material. The average of the average film thicknesses of the coating layers of the plurality of secondary particles was calculated by adding the average film thicknesses of the secondary particles evaluated, and dividing the sum by the number of the secondary particles evaluated.

The evaluation result is shown in the "Average film thickness" field of Table 1.

To evaluate the electrochemical characteristics, an all-solid-state battery containing a sulfide-based solid electrolyte was produced by the following method, for evaluation.

The obtained coated positive electrode active material and a sulfide-based solid electrolyte powder (Li₆PS₅Cl, a sulfide-based solid electrolyte having an argyrodite-type structure) were mixed at a mass ratio of coated positive electrode active material : solid electrolyte of 70:30, and this mixture was used as the positive electrode.

For the solid electrolyte layer (separator layer), the same solid electrolyte powder as that used in the positive electrode was used. For the negative electrode, an indium-lithium alloy prepared by pressing a small piece of a lithium foil against an indium foil and diffusing lithium into indium was used.

Then, the positive electrode layer, the solid electrolyte layer, and the negative electrode layer were stacked in this order in three layers and pressure-molded, to thereby produce a lithium secondary battery.

In an environment at 25°C, the produced all-solid-state battery was subjected to constant current charging at a current density of 0.1 C until the cell voltage became 3.93 V (4.55 V on an Li potential basis) and then subjected to constant voltage charging at 3.93 V until the current density became 0.01 C. Subsequently, the battery was subjected to constant current discharging at a current density of 0.1 C until 2.38 V (3.0 V on an Li potential basis) and then subjected to constant voltage discharging at 2.38 V until the current density became 0.01 C. Hereinafter, the charging/discharging operation described above is also referred to as initial charging/discharging. The capacity of the constant-current discharge at the current density of 0.1 C here was defined as the initial discharge capacity. In this Example, the initial discharge capacity was 180 mAh/g, and an initial average discharge voltage was 3.909 V on an Li basis. They are shown in the "Initial discharge capacity" and "Initial average discharge voltage" fields of Table 1, respectively.

Subsequently, the battery was subjected to constant current charging at a current density of 0.1 C until a cell voltage of 3.33 V (3.95 V on an Li potential basis), and then subjected to constant voltage charging at 3.33 V until the current density became 0.01 C.

Then, alternating impedance measurement was performed under the condition of an amplitude of 10 mV, and the magnitude of the impedance resistance was compared based on the magnitude of the real component of the resistance at a frequency of 1 Hz. In this Example, it was 100 Q, and is shown in the "Resistance" field of Table 1.

Subsequently, in an environment at 25°C, the all-solid-state battery was subjected to constant current charging at a current density of 0.1 C to a cell voltage of 3.93 V (4.55 V on an Li potential basis) and then subjected to constant voltage charging at 3.93 V until the current density became 0.01 C. Then, the battery was moved to an environment at 60°C, and subjected to constant voltage continuous charging (trickle charging) at the cell voltage of 3.93 V for 120 hours. Subsequently, the battery was returned to 25°C, subjected to constant current discharging and constant voltage discharging under the same conditions as those during the initial charging/discharging, and then subjected to charging and discharging under the same conditions as those during the initial charging/discharging. The capacity of the constant current discharge here is shown as "Capacity after continuous charging" in Table 1. In this Example, the capacity after continuous charging was 167 mAh/g. The ratio of the "capacity after continuous charging" to the "initial discharge capacity" is shown in "Capacity ratio between before and after test".

### (Example 2)

A solution containing Li-P glass and a solution containing Li-Nb glass were mixed at a P:Nb ratio of 50:50 by number of moles, to prepare a coating layer forming solution, which was an aqueous solution containing Li-P glass and Li-Nb glass and containing no organic components. A coated positive electrode active material and a lithium secondary battery were prepared in the same manner as in Example 1 except for the above point. It was confirmed by powder X-ray diffractometry that the coating layer of the coated positive electrode active material was amorphous. The evaluation results of electrochemical characteristics are shown in Table 1.

### (Example 3)

A solution containing Li-P glass and a solution containing Li-Nb glass were mixed at a P:Nb ratio of 75:25 by number of moles, to prepare a coating layer forming solution containing Li-P glass and Li-Nb glass and containing no organic components. A coated positive electrode active material and a lithium secondary battery were prepared in the same manner as in Example 1 except for the above point. It was confirmed by powder X-ray diffractometry that the coating layer of the coated positive electrode active material was amorphous. The evaluation results of the electrochemical characteristics are shown in Table 1.

### (Example 4)

A solution containing Li-P glass and a solution containing Li-Nb glass were mixed at a P:Nb ratio of 90:10 by number of moles, to prepare a coating layer forming solution containing Li-P glass and Li-Nb glass and containing no organic components. A coated positive electrode active material and a lithium secondary battery were prepared in the same manner as in Example 1 except for the above point. It was confirmed by powder X-ray diffractometry that the coating layer of the coated positive electrode active material was amorphous. The evaluation results of the electrochemical characteristics are shown in Table 1.

### (Example 5)

### (1) Coating Layer Forming Solution Preparation Step

A first ethanol solution was prepared by dissolving lithium ethoxide (LiOC₂H₅) and dibutyl phosphate (C₈H₁₉O₄P) in anhydrous ethanol.

A second ethanol solution was prepared by dissolving lithium ethoxide (LiOC₂H₅) and niobium pentaethoxide (Nb(OC₂H₅)₅) in anhydrous ethanol.

Subsequently, the first ethanol solution and the second ethanol solution were mixed such that the P:Nb ratio by number of moles would be 50:50, to prepare a coating layer forming solution, which was an ethanol solution containing lithium, phosphorus, and niobium. The coating layer forming solution was prepared such that Li: (P+Nb) would be 1:1. The coating layer forming solution was colorless and transparent, and no solids, such as precipitates and the like, were observed.

### (2) Mixing Step

In the mixing step, a positive electrode active material powder and the coating layer forming solution were mixed.

The mixing step was performed under the same conditions as in Example 1 except that the coating layer forming solution prepared in this Example was used.

In the mixing step, the coating amount was calculated and adjusted such that the coating layer film thickness would be 2 nm with respect to the specific surface area of the positive electrode active material powder obtained by the BET method.

### (3) Drying Step

Subsequently, the mixture, which was the positive electrode active material powder on which a coating layer was formed, was kept at a temperature 300°C in an oxygen atmosphere for 1 hour and dried, to remove the solvent and the like adhering to the positive electrode active material. By the above procedure, a coated positive electrode active material powder of which the coating layer contains lithium, phosphorus, niobium, and oxygen was prepared. The coated positive electrode active material powder contains the coating layer descried above on the surface of the positive electrode active material, and the composition of the positive electrode active material was LiNi_{0.5}Co_{0.2}Mn_{0.3}O₂ as described above.

It was confirmed by powder X-ray diffractometry that the coating layer of the coated positive electrode active material was amorphous.

A lithium secondary battery was produced under the same conditions as in Example 1 except that the coated positive electrode active material obtained was used. The evaluation results of the electrochemical characteristics are shown in Table 1.

### (Examples 6 and 7)

In the mixing step, the coating amount was calculated and adjusted such that the coating layer film thickness would be 6 nm (Example 6) and 9 nm (Example 7) with respect to the specific surface area of a positive electrode active material powder obtained by the BET method.

Coated positive electrode active materials were produced under the same conditions as in Example 5 except for the above point.

It was confirmed by powder X-ray diffractometry that the coating layers of the coated positive electrode active materials were amorphous.

Lithium secondary batteries were prepared under the same conditions as in Example 1 except that the coated positive electrode active materials obtained were used. The evaluation results of the electrochemical characteristics are shown in Table 1.

### (Comparative Example 1)

A solution was prepared by dissolving lithium ethoxide (LiOC₂H₅) and niobium pentaethoxide (Nb(OC₂H₅)₅) in ethanol such that the Li:Nb ratio by number of moles would be 1:1. This solution was used as a coating layer forming solution, and the drying condition was keeping at 300°C for 3 hours. Except for the above points, A coated positive electrode active material and a lithium secondary battery were prepared in the same manner as in Example 1 except for the above points. The evaluation results of the electrochemical characteristics are shown in Table 1.

### (Comparative Example 2)

A solution containing Li-P glass was only used as a coating layer forming solution. A coated positive electrode active material and a lithium secondary battery were prepared in the same manner as in Example 1 except for the above points. The evaluation results of the electrochemical characteristics are shown in Table 1.

### (Example 8)

A lithium secondary battery was prepared in the same manner as in Example 2 except that a solid electrolyte used to form a solid electrolyte layer was changed to Li₂S-P₂S₅-based glass ceramic (LPS-LiI) represented by the composition of xLi₃PS₄·LiI (x=5). The evaluation results of the electrochemical characteristics are shown in Table 1.

### (Comparative Example 3)

A lithium secondary battery was prepared in the same manner as in Comparative Example 1 except that a solid electrolyte used to form a solid electrolyte layer was changed to Li₂S-P₂S₅-based glass ceramic (LPS-LiI) represented by the composition of xLi₃PS₄·LiI (x=5). The evaluation results of the electrochemical characteristics are shown in Table 1.

### (Comparative Example 4)

A lithium secondary battery was prepared in the same manner as in Comparative Example 2 except that a solid electrolyte used to form a solid electrolyte layer was changed to Li₂S-P₂S₅-based glass ceramic (LPS-LiI) represented by the composition of xLi₃PS₄·LiI (x=5). The evaluation results of the electrochemical characteristics are shown in Table 1.

**[Table 1]**

| | Coating layer forming solution | P:Nb | Drying temp. | Average film thickness | Solid electrolyte | Resistance | Initial discharge capacity | Initial average discharge voltage | Discharge capacity after continuous charging | Capacity ratio between before and after test |
|---|---|---|---|---|---|---|---|---|---|---|
| | | (ratio by number of moles) | (°C) | (nm) | | (Ω) | (mAh/g) | (V) | (mAh/g) | (%) |
| Ex. 1 | Aqueous solution | 10:90 | 200 | 3 | Li₆PS₅Cl | 100 | 180 | 3.909 | 167 | 92.8 |
| Ex. 2 | | 50:50 | | | Li₆PS₅Cl | 85 | 182 | 3.912 | 175 | 96.2 |
| Ex. 3 | | 75:25 | | | Li₆PS₅Cl | 80 | 182 | 3.900 | 174 | 95.6 |
| Ex. 4 | | 90:10 | | | Li₆PS₅Cl | 80 | 180 | 3.895 | 170 | 94.4 |
| Ex. 5 | Ethanol solution | 50:50 | 300 | | Li₆PS₅Cl | 90 | 186 | 3.905 | 179 | 96.2 |
| Ex. 6 | | 50:50 | | 6 | Li₆PS₅Cl | 100 | 184 | 3.903 | 181 | 98.4 |
| Ex. 7 | | 50:50 | | 9 | Li₆PS₅Cl | 160 | 181 | 3.898 | 178 | 98.3 |
| Comp. Ex. 1 | | 0:100 | | 3 | Li₆PS₅Cl | 250 | 178 | 3.808 | 160 | 89.9 |
| Comp. Ex. 2 | Aqueous solution | 100:0 | 200 | | Li₆PS₅Cl | 100 | 175 | 3.888 | 165 | 94.3 |
| Ex. 8 | Aqueous solution | 50:50 | 200 | 3 | LPS-LiI | 95 | 178 | 3.905 | 155 | 87.1 |
| Comp. Ex. 3 | Ethanol solution | 0:100 | 300 | | LPS-LiI | 300 | 175 | 3.824 | 140 | 80.0 |
| Comp. Ex. 4 | Aqueous solution | 100:0 | 200 | | LPS-LiI | 120 | 170 | 3.875 | 145 | 85.3 |

From the results of Table 1, it was confirmed that the coated positive electrode active materials of which the coating layer contains lithium, phosphorus, the element M, and oxygen showed a low resistance, a high capacity, a high average discharge voltage, and a high discharge capacity after continuous charging, compared to those of which the coating layer contains only either phosphorus or the element M in addition to lithium and oxygen. That is, use of a coated positive electrode active material of which the coating layer contains lithium, phosphorus, the element M, and oxygen realized an all-solid-state battery having a low resistance, a high energy density, and a high voltage tolerance.

In this specification, when it is said that the resistance is low, it is meant that the impedance resistance described above is low. For example, an impedance resistance of 200 Ω or lower can be regarded as a low resistance.

When it is said that the energy density is high, it is meant that the initial discharge capacity described above is high. When it is said that voltage tolerance is high, it is meant that the discharge capacity after continuous charging described above is high. The initial discharge capacity and the discharge capacity after continuous charging can be compared with other experimental examples using the same solid electrolyte, for example.

When a focus is put on the positive electrode active material, the energy density is expressed as (initial discharge capacity (mAh/g)) × (initial average discharge voltage (V)) on an Li basis. It can be seen that the coated positive electrode active material according to one embodiment of the present disclosure has a high energy density as even compared with, for example, the all-solid-state battery disclosed in PTL 6.

This application claims priority based on Japanese Patent Application No. 2022-172104 filed with the Japan Patent Office on October 27, 2022, and the entire contents of Japanese Patent Application No. 2022-172104 are incorporated in this international application.

### REFERENCE SIGNS LIST

10 coated positive electrode active material for a lithium secondary battery
11 positive electrode active material
12 coating layer
20 lithium secondary battery
21 positive electrode
211 positive electrode terminal
22 solid electrolyte layer
23 negative electrode
231 negative electrode terminal
24 container

## Claims

1. A coated positive electrode active material for a lithium secondary battery, the coated positive electrode active material comprising:
a positive electrode active material; and
a coating layer disposed on a surface of the positive electrode active material,
wherein the positive electrode active material contains cobalt (Co),
the coating layer contains at least lithium (Li), phosphorus (P), an element M, and oxygen (O), and
the element M is a pentavalent transition metal element.

2. The coated positive electrode active material for a lithium secondary battery according to claim 1,
wherein a ratio of the phosphorus to a sum of the phosphorus and the element M contained in the coating layer is 0.1 or greater and 0.9 or less.

3. The coated positive electrode active material for a lithium secondary battery according to claim 1 or 2,
wherein the coating layer is amorphous.

4. The coated positive electrode active material for a lithium secondary battery according to claim 1 or 2,
wherein an average film thickness of the coating layer is 1 nm or greater.

5. The coated positive electrode active material for a lithium secondary battery according to claim 1 or 2,
wherein the element M is niobium (Nb).

6. The coated positive electrode active material for a lithium secondary battery according to claim 1 or 2,
wherein the positive electrode active material has a layered structure.

7. A coating layer forming solution used for forming the coating layer of the coated positive electrode active material for a lithium secondary battery according to claim **1,** the coating layer forming solution comprising:
lithium (Li), phosphorus (P), and the element M.

8. The coating layer forming solution according to claim 7,
wherein the coating layer forming solution is one or more types selected from an aqueous solution and an alcohol solution.

9. A lithium secondary battery, comprising:
a positive electrode;
a negative electrode; and
a solid electrolyte layer,
wherein the positive electrode contains:
the coated positive electrode active material for a lithium secondary battery according to claim 1 or 2; and
a sulfide-based solid electrolyte.

10. The lithium secondary battery according to claim 9,
wherein the sulfide-based solid electrolyte contains at least one of an argyrodite-type sulfide-based solid electrolyte or an Li₂S-P₂S₅-based solid electrolyte.
